# EUROPEAN PATENT SPECIFICATION

(11) **EP 3 717 340 B1**
(45) Date of publication and mention of the grant of the patent: **13.10.2021**
(21) Application number: 18827234.8
(22) Date of filing: 29.11.2018
(51) Int. Cl.: B62M 3/08, B62M 5/00, B62M 6/00, B62H 5/10, B62K 25/04

(54) **MOTOR VEHICLE WITH PEDALS**
KRAFTFAHRZEUG MIT PEDALEN
VÉHICULE À MOTEUR À PÉDALES

(30) Priority: 29.11.2017 IT 201700137216
(43) Date of publication of application: 07.10.2020
(73) Proprietor: PIAGGIO & C. S.p.A., 56025 Pontedera (Pisa) (IT)
(72) Inventor: SANTUCCI, Mario, 56025 Pontedera (Pisa) (IT); MARIOTTI, Valentino, 56025 Pontedera (Pisa) (IT)
(74) Representative: Carangelo, Pierluigi
(86) International application number: PCT/IB2018/059439
(87) International publication number: WO 2019/106587

(56) References cited:
- CN-Y- 2 291 368
- NL-C- 85 974

## Description

The present description relates to the technical field of motor vehicles provided with pedals of the type equal or similar to the pedals of a bicycle, and more specifically it relates to a motor vehicle as defined in the preamble of claim 1. Document CN 2 291 368 Y shows the preamble of claim 1.

Motor vehicles are known, in particular mopeds, provided with pedals similar to the pedals of a bicycle, which are mainly used for starting the moped. In particular, on pedaling, as in the case of a bicycle, by means of the aforesaid pedals, the driving wheel of the moped is actuated, transmitting in turn the movement to the motor by means of the transmission belt. Typically, in mopeds according to the described prior art, the driver's comfort is not optimal because the available space for resting the feet once the moped has been started is relatively limited and the use of the pedals is no longer necessary. Furthermore, the pedals laterally protruding from the moped can assume undesired positions, which can hinder the driving of the moped, particularly on a bend when the moped is inclined.

It is a general object of the present description to provide a motor vehicle, which is capable of overcoming, or at least partially reducing, the drawbacks discussed above with reference to the prior art.

This and other objects are achieved by a motor vehicle as defined and characterized in the appended claim 1 in the most general embodiment thereof and in the dependent claims in particular embodiments.

The invention will be better understood from the following detailed description of embodiments thereof, which are shown by way of example and thus without limitation, related to the accompanying drawings, in which:
- Fig. 1 is a side plan view of a motor vehicle comprising a pair of footplates (only one of which can be seen in Fig. 1) arranged in a first configuration;
- Fig. 2 is a lateral plan view similar to Fig. 1, wherein the footplates are arranged in a second configuration;
- Fig. 3 is a perspective view of the motor vehicle in Fig. 1, where the footplates are arranged in the second configuration in Fig. 2;
- Fig. 4 is a diagrammatic view showing one of the footplates in Fig. 1 in the first configuration in Fig. 1 connected to a suspension assembly of the motor vehicle in Fig. 1, the suspension assembly being depicted in a first configuration;
- Fig. 5 is a diagrammatic view similar to Fig. 4, where the footplate in Fig. 4 is depicted in the second configuration in Fig. 2 and where the suspension assembly is depicted in a second configuration.

It is worth noting that, for the purposes of the present description, the terms "horizontal", "upper" and other similar terms used to describe a motor vehicle or parts thereof shall be understood as referred to the motor vehicle in a normal state of use, in which the motor vehicle is not inclined.

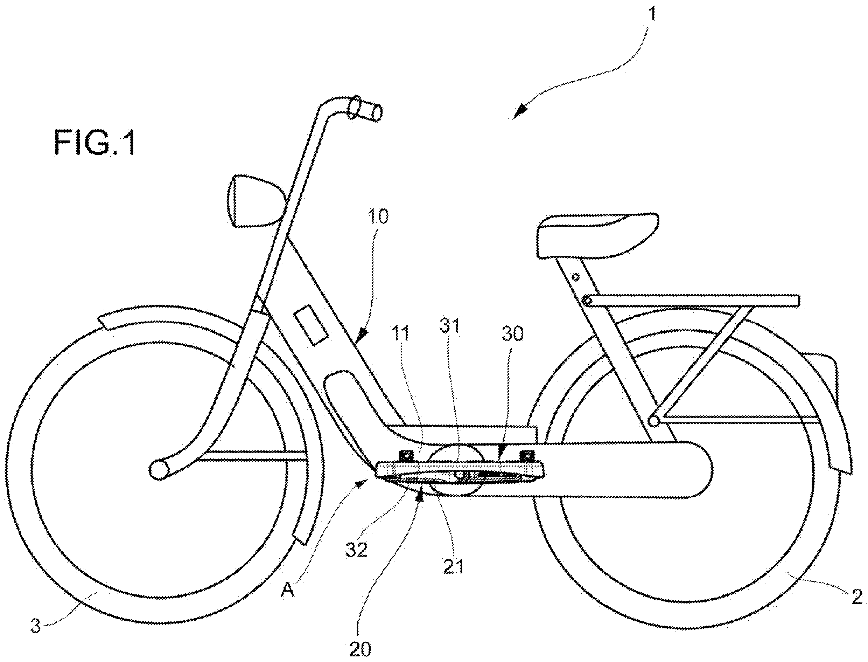

With initial reference to Figures 1-3, a motor vehicle according to a preferred embodiment has been globally indicated with reference number 1. The motor vehicle 1 is preferably an electric motor vehicle. The motor vehicle 1 is provided with at least one rear wheel 2 and one front wheel 3. In the illustrated example, the motor vehicle 1 is a moped 1. The motor vehicle 1 comprises a motor vehicle body 10 and a pair of pedals 20 operatively connected to the body 10 on two opposite sides of the body 10. The motor vehicle body 10 is defined by a frame extending between the front wheel 3 and the rear wheel 2. In particular, the pedals 20 laterally project from two opposite sides of the motor vehicle 1. The pedals 20 are pedals similar to the pedals of a bicycle.

In detail, each pedal 20 comprises a crank 21, which is preferably operatively connected to a central movement 22 of the motor vehicle 1 and a support part 23 for the foot connected to the crank 21. In a manner known per se, the pedals 20 are operatively connected to a driving wheel of the motor vehicle 1 by means of appropriate transmission elements, of the type known per se and not shown in detail in the figures, in order to allow such a driving wheel to be actuated. Preferably, such a driving wheel is the rear wheel 2. If the motor vehicle 1 is an electric motor vehicle, the pedals 20 mainly serve in the event of an emergency, such as when the charge of the battery of the motor vehicle 1 has run out or when the motor vehicle 1 must overcome a slope which is greater than the design specification. In particular, the pedals can be used by the user to help the movement of the vehicle. It is worth noting that the teachings of the present description are not limited to a moped 1 but they are generally applicable to any type of motor vehicle provided with pedals equal or similar to the pedals 20.

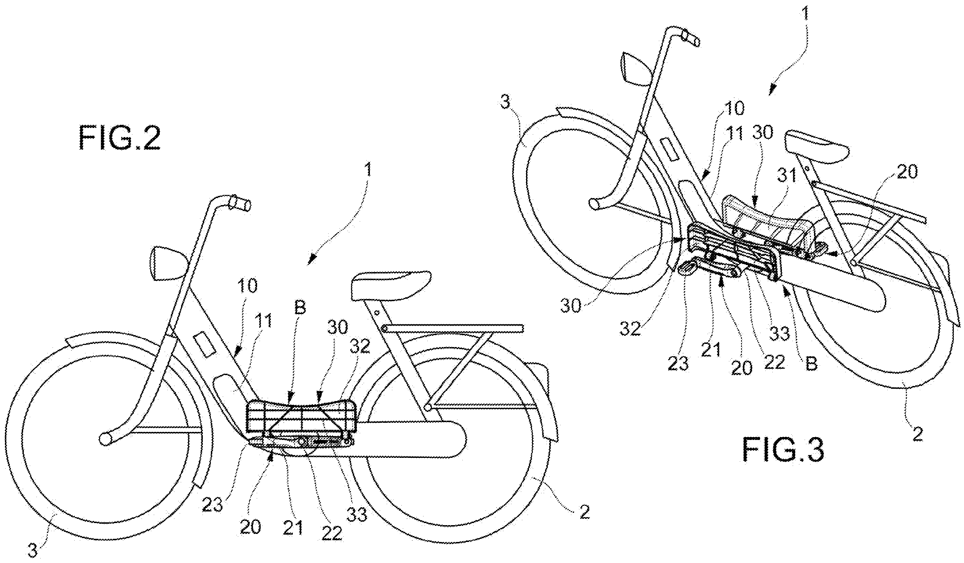

Again with reference to Figures 1-3, the motor vehicle 1 comprises a pair of footplates 30. Each footplate 30 is associated with a respective pedal 20. Therefore, the two footplates 30 are thus arranged on opposite sides to the motor vehicle body 10. The footplates 30 are connected to the body 10, and more preferably to the so-called "central tunnel" 11 of the motor vehicle 1, so as to assume a first configuration A of pedal inhibition (Fig. 1) and a second configuration B of pedal use (Fig. 2 and Fig. 3). In the first configuration A, the footplates 30 cover the pedals 20 allowing the driver to rest his/her feet on the footplates 30. In particular, in the first configuration A the footplates 30 make the pedals 20 inactive, i.e. not usable. In the second configuration B, the footplates 30 allow the driver to use the pedals 20, i.e. in the second configuration B the footplates 30 are arranged so as to allow the driver to access the pedals 20 and pedal freely without the footplates 30 themselves forming an obstacle.

According to a preferred embodiment, in the first configuration A, the footplates 30 are overlapping and coupled to the pedals 20 in order to keep the pedals 20 in a predetermined position. Such a predetermined position is preferably a horizontal or substantially horizontal position. Thereby, it is possible to avoid, or in any case reduce, the possibility of the pedals 20 forming an obstacle when driving the motor vehicle 1.

In particular, each footplate 30 comprises a first face 31 for supporting the feet and a second face 32 opposite the first face 31. Preferably, the second face 32 comprises coupling elements 33 configured to be coupled to the crank 21 and/or to the support part 23 of the respective pedal 20. The coupling elements 33 can comprise, for example and without limitation, at least one coupling rib 33 shaped for the coupling to the crank 21 and/or to the support part 23 of the respective pedal 20.

In particular, it is worth noting that, when moving from the second configuration B to the first configuration A, each footplate 30 substantially allows the coupling of the respective pedal 20 to the footplate 30 to be guided, i.e. bringing each footplate 30 from the second configuration B to the first configuration A, these help guiding the pedals 20, aligning them in a different position from the horizontal position, towards the horizontal position, thus achieving the coupling between the respective pedal 20 and the footplate 30, in particular to the coupling rib 33.

In other words, again, when the footplates 30 are lowered, they contrast against the pedals 20, if these are in a non-horizontal position, pushing them until they are in the horizontal position, thus achieving the coupling with the footplates 30.

Preferably, the footplates 30 are hinged to the body 10. In this case, the footplates 30 are preferably hinged to rotate about a horizontal rotation axis orthogonal to the rotation axis of the pedals 20.

Preferably, the footplates 30 can be releasably locked in the second configuration B (Fig. 2), for example, and without limitation, by means of magnets integral with the footplates 30, which are arranged so as to be able to be attached to the motor vehicle body 10, if such a body is made of metal material, or to a metal element associated with the body 10.

In a constructional variation, the footplates 30 are a separate piece from the vehicle body 10 to be assembled/disassembled when necessary.

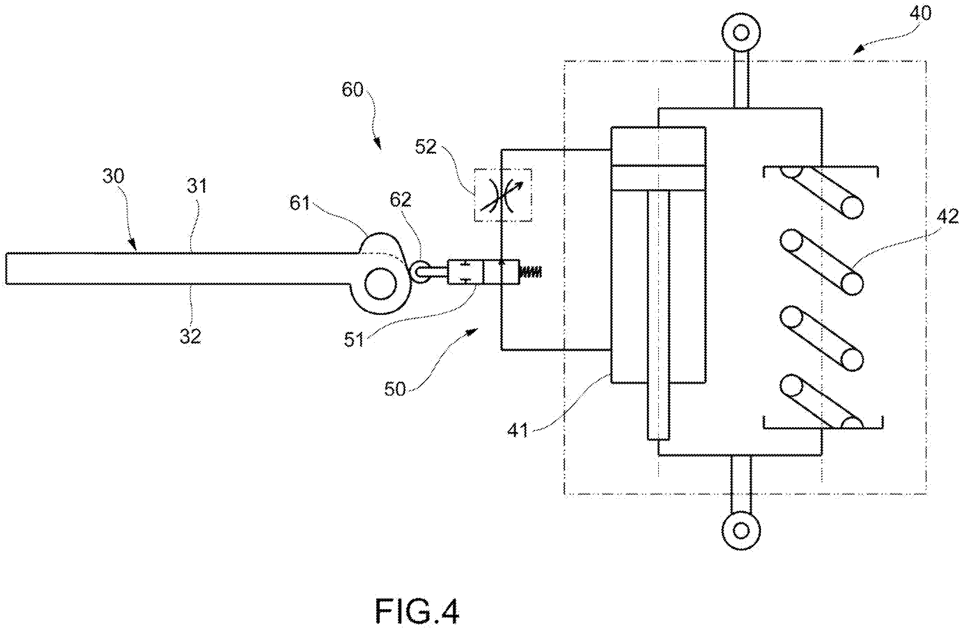

With reference to Figures 4-5, according to a convenient embodiment, the motor vehicle 1 comprises a suspension assembly 40 (diagrammatically depicted in Figures 4-5) and at least one of the footplates 30 is operatively connected to the suspension assembly 40 in order to lock the suspension assembly 40 when such a footplate 30 assumes the second configuration. This allows a reduction in effort by the driver when the motor vehicle 1 is used in bicycle mode, i.e. when the driver uses the pedals 20. This is because part of the energy, which the driver uses for pedaling, is dissipated in the suspension assembly 40.

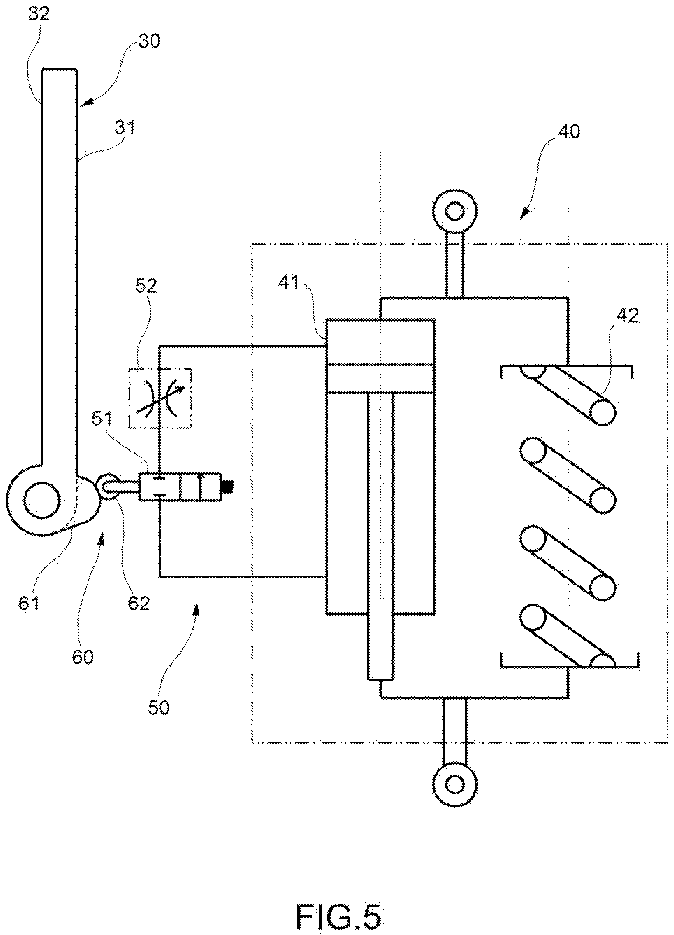

According to one embodiment, the suspension assembly 40 preferably comprises at least one elastic element 42, such as for example a spring 42, and more preferably it comprises a damper 41 and a spring 42. According to one embodiment, the motor vehicle 1 comprises a hydraulic circuit 50 for controlling the suspension assembly 40, which is operatively interposed between the footplate 30 operatively connected to the suspension assembly 40, and the suspension assembly 40 itself. In particular, the hydraulic circuit 50 comprises a control valve 51 for opening/closing the circuit 50, and preferably an element 52 for adjusting the hydraulic braking of the damper 41, such as for example a varying throat 52. According to one embodiment, in order to command the control valve 51, the motor vehicle 1 can comprise a control system 60 operatively interposed between the footplate 30 operatively connected to the suspension assembly 40 and the control valve 51. The control system 60 is configured to control the valve 51 in order for the valve 51 itself to assume an open configuration (Fig. 4) when the footplate 30 assumes the first configuration A (Fig. 1), and a closed configuration (Fig. 5) when the footplate 30 assumes the second configuration B (Fig. 2). In the open configuration (Fig. 4), the valve 51 is arranged so as to allow the flow of the hydraulic fluid through the circuit 50 and thus the operation of the suspension assembly 40. In the closed configuration (Fig. 5), the valve 51 is arranged so as to prevent the flow of the hydraulic fluid through the circuit 50 thus causing the locking of the suspension assembly 40. According to one embodiment, the control system 60 comprises a kinematic control mechanism 60. The kinematic mechanism 60 is preferably a kinematic cam-tappet mechanism 60 comprising a cam 61 associated with the footplate 30 and a tappet 62 connected to the valve 51. The tappet 62 is controlled by the cam 61. Preferably, the cam 61 is formed by a shaped portion 61 of the footplate 30.

It is worth noting that, according to one embodiment, the assembly suspension 40 can also be locked by means of a mechanical system (not shown) of a different type from a hydraulic-type system like that described above with reference to Figures 4-5.

Based on the above, it is thus possible to understand how a motor vehicle according to the present description is able to achieve the above objects.

Without prejudice to the principle of the invention, the embodiments and construction details can be varied widely with respect to the description and disclosure given purely by way of a non-limiting example, but without departing from the scope of the invention, as defined in the appended claims.

## Claims

1. A motor vehicle (1) comprising:
a motor vehicle body (10);
a pair of pedals (20) operatively connected to the body (10) of the motor vehicle on two opposite sides of the body (10) of the motor vehicle;
wherein it comprises a pair of footplates (30), each associated with a pedal (20) of said pair, the footplates (30) of said pair being connected to the body (10) of the motor vehicle so as to assume a first pedal inhibition configuration (A), wherein they cover said pedals (20) allowing the driver to rest the feet on the footplates (30), and a second pedal use configuration (B), wherein they allow the driver to use said pedals (20),
**characterized in that** the motor vehicle (1) comprises a suspension assembly (40) and at least one of said footplates (30) is operatively connected to the suspension assembly (40) so as to lock the suspension assembly (40) when said at least one footplate (30) assumes the second configuration (B).

2. A motor vehicle (1) according to claim 1, wherein, in said first configuration (A) the footplates (30) are overlapping and coupled to said pedals (20) so as to keep said pedals (20) in a predetermined position.

3. A motor vehicle (1) according to claim 2, wherein said predetermined position is a substantially horizontal position.

4. A motor vehicle (1) according to claim 2 or 3, wherein each of said pedals (20) comprises a crank (21) and a resting part (23) for the foot connected to the crank (21), wherein each of said semi footplates (30) comprises a first resting face (31) of the feet and a second face (32), opposite the first face (31), the second face (32) comprising coupling elements (33) configured to be coupled to the crank (21) and/or to the resting part (23) of the respective pedal (20) of said pedals (20).

5. A motor vehicle (1) according to any one of the preceding claims, wherein said footplates (30) are hinged to the body (10) of the motor vehicle.

6. A motor vehicle (1) according to any one of the preceding claims, comprising:
- a hydraulic circuit (50) for controlling the suspension assembly (40), the hydraulic circuit (50) being operatively interposed between said at least one footplate (30), operatively connected to the suspension assembly (40), and the suspension assembly (40), said hydraulic circuit (50) comprising a control valve (51) for opening/closing the hydraulic circuit (50).

7. A motor vehicle (1) according to claim 6, wherein a control system (60) is provided for controlling the control valve (51), said control system (60) being operatively interposed between said at least one footplate (30) connected to the suspension assembly (40) and the control valve (51), the control system (60) being configured so as to control the control valve (51) to cause such valve (51) to assume an opening configuration, when said at least one footplate (30) assumes the first pedal inhibition configuration (A), and a closing configuration, when said at least one footplate (30) assumes the second pedal use configuration (B), in the opening configuration the control valve (51) being arranged so as to allow the flow of a hydraulic fluid through the hydraulic circuit (50) and consequently the working of the suspension assembly (40), in the closing configuration the control valve (51) being arranged so as to prevent the flow of the hydraulic fluid through the hydraulic circuit (50) consequently causing the lock of the suspension assembly (40).

8. A motor vehicle (1) according to claim 7, wherein the control system (60) comprises a control kinematic mechanism (60).

9. A motor vehicle (1) according to claim 8, wherein the control kinematic mechanism (60) is a cam-tappet kinematic mechanism (60), comprising a cam (61) associated with said at least one footplate (30) and a tappet (62), connected to the control valve (51), said tappet (62) being controlled by the cam (61), in particular, the cam (61) is formed by a shaped portion (61) of said at least one footplate (30).

## Patentansprüche

1. Kraftfahrzeug (1), das umfasst:
eine Kraftfahrzeugkarosserie (10);
ein Paar von Pedalen (20), die mit der Karosserie (10) des Kraftfahrzeugs an zwei entgegengesetzten Seiten der Karosserie (10) des Kraftfahrzeugs betrieblich verbunden sind;
wobei es ein Paar von Fußplatten (30) umfasst, die jeweils einem Pedal (20) des Paares zugeordnet sind, die Fußplatten (30) des Paares mit der Karosserie (10) des Kraftfahrzeugs verbunden sind, um eine erste Pedalsperrkonfiguration (A) einzunehmen, wobei sie die Pedale (20) abdecken, was es dem Fahrer erlaubt, die Füße auf den Fußplatten (30) rasten zu lassen, und eine zweite Pedalverwendungskonfiguration (B), wobei sie es dem Fahrer erlauben, die Pedale (20) zu verwenden,
**dadurch gekennzeichnet, dass** das Kraftfahrzeug (1) eine Aufhängungsanordnung (40) umfasst und mindestens eine der Fußplatten (30) betrieblich mit der Aufhängungsanordnung (40) verbunden ist, um die Aufhängungsanordnung (40) zu verriegeln, wenn die mindestens eine Fußplatte (30) die zweite Konfiguration (B) einnimmt.

2. Kraftfahrzeug (1) nach Anspruch 1, wobei in der ersten Konfiguration (A) die Fußplatten (30) überlappen und mit den Pedalen (20) gekoppelt sind, um die Pedale (20) in einer vorbestimmten Position zu halten.

3. Kraftfahrzeug (1) nach Anspruch 2, wobei die vorbestimmte Position eine im Wesentlichen horizontale Position ist.

4. Kraftfahrzeug (1) nach Anspruch 2 oder 3, wobei jedes der Pedale (20) eine Kurbel (21) und Rastteil (23) für den Fuß, das mit der Kurbel (21) verbunden ist, umfasst, wobei jede der Halb-Fußplatten (30) eine erste Rastfläche (31) der Füße und eine zweite Fläche (32), die der ersten Fläche (31) entgegengesetzt ist, umfasst, wobei die zweite Fläche (32) Kopplungselemente (33) umfasst, die konfiguriert sind, um mit der Kurbel (21) und/oder dem Rastteil (23) des jeweiligen Pedals (20) der Pedale (20) gekoppelt zu sein.

5. Kraftfahrzeug (1) nach einem der vorstehenden Ansprüche, wobei die Fußplatten (30) an der Karosserie (10) des Kraftfahrzeugs angelenkt sind.

6. Kraftfahrzeug (1) nach einem der vorstehenden Ansprüche, das umfasst:
- einen Hydraulikkreislauf (50) zum Steuern der Aufhängungsanordnung (40), wobei der Hydraulikkreislauf (50) betrieblich zwischen der mindestens einen Fußplatte (30), die betrieblich mit der Aufhängungsanordnung (40) verbunden ist, und der Aufhängungsanordnung (40) eingefügt ist, wobei der Hydraulikkreislauf (50) ein Steuerventil (51) zum Öffnen/Schließen des Hydraulikkreislaufs (50) umfasst.

7. Kraftfahrzeug (1) nach Anspruch 6, wobei ein Steuersystem (60) zum Steuern des Steuerventils (51) bereitgestellt ist, wobei das Steuersystem (60) betrieblich zwischen der mindestens einen Fußplatte (30), die mit der Aufhängungsanordnung (40) verbunden ist, und dem Steuerventil (51) eingefügt ist, wobei das Steuersystem (60) konfiguriert ist, um das Steuerventil (51) derart zu steuern, dass ein solches Ventil (51) veranlasst wird, eine Öffnungskonfiguration einzunehmen, wenn die mindestens eine Fußplatte (30) die erste Pedalsperrkonfiguration (A) einnimmt, und eine Schließkonfiguration, wenn die mindestens eine Fußplatte (30) die zweite Pedalverwendungskonfiguration (B) einnimmt, wobei das Steuerventil (51) in der Öffnungskonfiguration derart angeordnet ist, dass es den Fluss eines Hydraulikfluids durch den Hydraulikkreislauf (50) und folglich das Funktionieren der Aufhängungsanordnung (40) erlaubt, wobei das Steuerventil (51) in der Schließkonfiguration derart angeordnet ist, dass es den Fluss des Hydraulikfluids durch den Hydraulikkreislauf (50) verhindert, wodurch folglich das Verriegeln der Aufhängungsanordnung (40) veranlasst wird.

8. Kraftfahrzeug (1) nach Anspruch 7, wobei das Steuersystem (60) einen kinematischen Steuermechanismus (60) umfasst.

9. Kraftfahrzeug (1) nach Anspruch 8, wobei der kinematische Steuermechanismus (60) ein kinematischer Nocken-Stößel-Mechanismus (60) ist, der einen Nocken (61), der mit der mindestens einen Fußplatte (30) und einem Stößel (62) assoziiert ist, der mit dem Steuerventil (51) verbunden ist, umfasst, wobei der Stößel (62) von dem Nocken (61) gesteuert wird, der Nocken (61) insbesondere von einem geformten Abschnitt (61) der mindestens einen Fußplatte (30) gebildet ist.

## Revendications

1. Véhicule à moteur (1) comprenant :
une carrosserie de véhicule à moteur (10) ;
une paire de pédales (20), reliées fonctionnellement à la carrosserie (10) du véhicule à moteur,
sur deux côtés opposés de la carrosserie (10) du véhicule à moteur ;
**caractérisé en ce qu'**il comprend une paire de repose-pieds (30), dont chacun est associé à une pédale (20) de ladite paire, les repose-pieds (30) de ladite paire étant reliés à la carrosserie (10) du véhicule à moteur de manière à adopter une première configuration d'inhibition des pédales (A), dans laquelle ils recouvrent lesdites pédales (20), ce qui permet au conducteur de poser les pieds sur les repose-pieds (30), et une seconde configuration d'utilisation des pédales (B), dans laquelle ils permettent au conducteur d'utiliser lesdites pédales (20),
**caractérisé en ce que** le véhicule à moteur (1) comprend un ensemble de suspension (40) et **en ce que** l'au moins l'un desdits repose-pieds (30) est fonctionnellement relié à l'ensemble de suspension (40) de manière à verrouiller l'ensemble de suspension (40) lorsque ledit au moins un repose-pieds (30) adopte la seconde configuration (B).

2. Véhicule à moteur (1) selon la revendication 1, dans lequel, dans ladite première configuration (A), les repose-pieds (30) se chevauchent et sont accouplés auxdites pédales (20), de manière à maintenir lesdites pédales (20) dans une position prédéterminée.

3. Véhicule à moteur (1) selon la revendication 2, dans lequel ladite position prédéterminée est une position sensiblement horizontale.

4. Véhicule à moteur (1) selon la revendication 2 ou 3, dans lequel chacune desdites pédales (20) comprend une manivelle (21) et une partie d'appui (23) pour le pied reliée à la manivelle (21), dans lequel chacune desdites moitiés de repose-pieds (30) comprend une première face d'appui (31) des pieds et une seconde face (32), opposée à la première face (31), la seconde face (32) comprenant des éléments d'appariement (33) conçus pour être accouplés à la manivelle (21) et/ou à la partie d'appui (23) de la pédale respective (20) desdites pédales (20).

5. Véhicule à moteur (1) selon l'une quelconque des revendications précédentes, dans lequel lesdits repose-pieds (30) sont articulés sur la carrosserie (10) du véhicule à moteur.

6. Véhicule à moteur (1) selon l'une quelconque des revendications précédentes, comprenant :
- un circuit hydraulique (50) de commande de l'ensemble de suspension (40), le circuit hydraulique (50) étant fonctionnellement interposé entre ledit au moins un repose-pieds (30), fonctionnellement relié à l'ensemble de suspension (40) et à l'ensemble de suspension (40), ledit circuit hydraulique (50) comprenant une vanne de commande (51) permettant d'ouvrir/de fermer le circuit hydraulique (50).

7. Véhicule à moteur (1) selon la revendication 6, dans lequel un système de commande (60) sert à commander la vanne de commande (51), ledit système de commande (60) étant interposé fonctionnellement entre ledit au moins un repose-pieds (30) relié à l'ensemble de suspension (40) et la vanne de commande (51), le système de commande (60) étant configuré de manière à commander la vanne de commande (51) pour amener cette vanne (51) à adopter une configuration d'ouverture lorsque ledit au moins un repose-pieds (30) adopte la première configuration d'inhibition des pédales (A) et une configuration de fermeture lorsque ledit au moins un repose-pieds (30) adopte la seconde configuration d'utilisation des pédales (B), dans la configuration d'ouverture, la vanne de commande (51) étant agencée de manière à permettre l'écoulement d'un fluide hydraulique dans le circuit hydraulique (50) et par conséquent le fonctionnement de l'ensemble de suspension (40), dans la configuration de fermeture la vanne de commande (51) étant agencé de manière à empêcher l'écoulement du fluide hydraulique dans le circuit hydraulique (50), ce qui induit donc le verrouillage de l'ensemble de suspension (40).

8. Véhicule à moteur (1) selon la revendication 7, dans lequel le système de commande (60) comprend un mécanisme cinématique de commande (60).

9. Véhicule à moteur (1) selon la revendication 8, dans lequel le mécanisme cinématique de commande (60) est un mécanisme cinématique came-poussoir (60), comprenant une came (61) associée audit au moins un repose-pieds (30) et un poussoir (62) relié à la vanne de commande (51), ledit poussoir (62) étant commandé par la came (61), en particulier, la came (61) est formée par une partie façonnée (61) dudit au moins un repose-pieds (30).
